# EUROPÄISCHE PATENTSCHRIFT

(11) **EP 1 652 609 B1**
(45) Veröffentlichungstag und Bekanntmachung des Hinweises auf die Patenterteilung: **20.05.2009**
(21) Anmeldenummer: 05021869.2
(22) Anmeldetag: 07.10.2005
(51) Int. Cl.: B23H 3/02

(54) **Verfahren zum Senken von Werkstücken**
Method for electrochemical machining of workpieces
Procédé pour usinage par électrochimie de pieces de travail.

(30) Priorität: 14.10.2004 DE 102004049967
(43) Veröffentlichungstag der Anmeldung: 03.05.2006
(73) Patentinhaber: MTU Aero Engines GmbH, 80995 München (DE)
(72) Erfinder: Bayer, Erwin, 85221 Dachau (DE); Bussmann, Martin, 85247 Schwabhausen (DE); Kränzler, Thomas, 88682 Salem (DE); Platz, Albin, 86510 Ried-Baindlkirch (DE); Steinwandel, Jürgen, 88690 Uhldingen-Mühlhofen (DE)

(56) Entgegenhaltungen:
- WO-A-02/086198
- WO-A-02/090030

## Beschreibung

Die vorliegende Erfindung betrifft ein Verfahren zum Senken von Werkstücken, wobei zwischen einer Senkelektrode durch ein Elektrolyt hindurch ein Strom zu einem Werkstück fließt. Durch den Stromfluss erfolgt ein Abtragen von Material an der Oberfläche des Werkstückes. Dabei wird die Senkelektrode in einem vorbestimmten Abstand zum Werkstück über selbiges hinweggeführt.
Das Dokument WO02/090030, welches als nächstliegender Stand der Technik anzusehen ist, zeigt ein derartiges Verfahren.
Durch das Senken können hochpräzise Oberflächen erzeugt werden. Die Bearbeitungspräzision hängt dabei insbesondere davon ab, wie genau die Senkelektrode in möglichst nahem Abstand zum Werkstück geführt wird. Je geringer der Abstand zwischen Senkelektrode und Werkstück ist, um so geringer ist die Zone, in der sich ein elektrisches Feld ausbildet, in welchem der Stromfluss und das Abtragen von Material von der Oberfläche des Werkstücks stattfindet.

Dabei kommt es zur Sicherstellung einer guten Bearbeitungspräzision darauf an, dass das Führen der Senkelektrode gegenüber dem Werkstück mit möglichst großer Präzision erfolgt. Nur auf diese Weise kann verhindert werden, dass ein Kurzschluss zwischen Senkelektrode und Werkstück entsteht, weil die Spannung für den bestehenden Abstand zu groß geworden ist und ein Spannungsdurchschlag erfolgt. Ein Spannungsdurchschlag führt letztlich dazu, dass auf dem Werkstück unerwünschte Oberflächenbeschädigungen auftreten und auch die Senkelektrode Schaden erleidet. Um eine möglichst große Abtragsgeschwindigkeit von der Oberfläche des Werkstücks zu erreichen, ist dagegen ein möglichst hoher Arbeitsstrom, also eine möglichst große Arbeitsspannung zwischen Senkelektrode und Werkstück gewünscht. Je größer die Annäherung der Arbeitsspannung an die Durchschlagspannung ist um so größer ist die erforderliche Präzision für die Abstandsregelung.

Aufgabe der vorliegenden Erfindung ist es, ein Verfahren bereitzustellen, dass es erlaubt, in besonders günstiger Weise den Abstand zwischen Werkstück und Senkelektrode möglichst genau zu bestimmen und zu regeln.

Diese Aufgabe wird in vorteilhafter Weise durch ein Verfahren gemäß Anspruch 1 gelöst.

Ein Verfahren zum Senken von Werkstücken sieht eine Senkelektrode vor, die in bestimmtem Abstand zum Werkstück geführt wird. Zwischen Werkstück und Senkelektrode ist ein Elektrolyt vorgesehen, durch welchen hindurch zwischen Senkelektrode und Werkstück ein Arbeitsstrom fließt. Der Arbeitsstrom ergibt sich aus einer Arbeitsspannung, welche an der Senkelektrode erzeugt wird, wobei das Werkstück zur Masse hin geschlossen ist. Zum Durchführen des Senkvorganges ist der Abstand zwischen Senkelektrode und Werkstück geregelt und die Arbeitsspannung so bestimmt, dass der sich ergebende Arbeitsstrom ein Gleichstrom oder ein gepulster Gleichstrom ist - die Arbeitsspannung ist also eine Gleichspannung fester oder bestimmter Größe.

Gemäß der Erfindung ist der Arbeitsspannung zum Erzeugen des Arbeitsstromes eine Messspannung überlagert. Dabei wird der sich aufgrund des Aufschaltens der Messspannung ergebende Messstrom erfasst und aus der Beziehung zwischen Messspannung und Messstrom auf den Abstand zwischen Senkelektrode und Werkstück geschlossen.

Das kurzzeitige Aufschalten einer Messspannung ermöglicht es, den Abstand zwischen Senkelektrode und Werkstück zu ermitteln, wobei in vorteilhafter Weise eine gute Trennung zwischen Messsignal (Messstrom) und Arbeitsstrom gegeben ist, welche die Signalauswertung und damit die Regelungsqualität verbessert. Aufgrund der Tatsache, dass die Messspannung gegenüber der angelegten Arbeitsspannung gering ist, besteht die Gefahr eines Kurzschlusses nicht. Die Kurzschlussgefahr wird auch dadurch gering gehalten, dass die Zeit, während der die Messspannung aufrechterhalten wird, möglichst gering gehalten ist, so dass die zusätzliche elektrische Leistung durch das Anheben der Spannung geregelt ist. Insbesondere wird es ermöglicht, mittels des Messstroms zu erfassen, wann das sich ausbildende elektrische Feld zwischen Senkelektrode und Werkstück so stark ist, dass eine weitere Spannungserhöhung der Arbeitsspannung zu einem Auftreten von Plasmavorentladungen führt, bei der die Ladungsträgerproduktion im Elektrolyt überproportional zunimmt. Es entspricht einer optimalen Ausgestaltung hinsichtlich der Abtragsintensität und damit Bearbeitungsgeschwindigkeit, wenn die Arbeitsspannung so bestimmt ist, dass bei gegebenem Abstand zwischen Senkelektrode und Werkstück die Grenze von entstehenden Plasmavorentladungen gerade noch gemieden wird. In diesem Arbeitsbereich ist bei genau geregeltem Abstand, wie es durch das vorliegende Verfahren ermöglicht wird, die Arbeitsgeschwindigkeit maximiert.

Es entspricht einer bevorzugten Ausgestaltung der Erfindung, wenn das Erzeugen der Messspannung periodisch erfolgt, wobei die Periodizität der Spannungserzeugung vorzugsweise festgelegt ist, wobei die Periodizität insbesondere auch danach bemessen sein kann, wie groß die Annäherung der Arbeitsbedingungen an den Bereich der Plasmavorentladungen gewählt ist. Je größer der Sicherheitsabstand zum Bereich der Plasmavorentladungen gewählt wird, desto größer kann die Periodizität für die Überprüfung des Abstandes zwischen Senkelektrode und Werkstück gewählt werden. Insbesondere ist es aber auch möglich, die Periodizität des Erzeugens der Messspannung in Abhängigkeit der Verfahrgeschwindigkeit der Senkelektrode zu bestimmen. Je größer die Verfahrgeschwindigkeit der Senkelektrode gegenüber dem Werkstück ist, desto größer ist die Gefahr, dass ein einmal gegebener Abstand nicht eingehalten wird und durch Oberflächenstörungen des Werkstücks oder Ungenauigkeiten der Steuerung der Verfahrbewegung ein zu geringer Abstand auftritt und es somit zu Funkenschlag kommt.

Gemäß vorteilhafter Ausgestaltung der Erfindung handelt es sich bei der Messspannung um eine Gleichspannung, vorzugsweise kurzer Zeitdauer, wobei die Spannungsdifferenz zwischen Senkelektrode und Werkstück, also die Arbeitsspannung, durch das Aufschalten der Messspannung erhöht wird.

Gemäß alternativer Ausgestaltung kann auch vorgesehen sein, dass es sich bei der Messspannung um eine Wechselspannung, insbesondere eine sinusförmige oder eine rechteckförmige Wechselspannung handelt. Dabei ist die Periodendauer des Signals so bemessen, dass allenfalls eine geringe Anzahl von Schwingungsdauern der Spannung in der Messfrequenz enthalten ist. Es entspricht einer bevorzugten Ausgestaltung, wenn die Pulsdauer der Messspannung genau einer Spannungsschwingung entspricht. Bei der Wechselspannung kann es sich sowohl um eine sinusförmige, als auch um eine dreiecksförmige oder rechteckförmige Spannungskurve handeln.

Es entspricht bevorzugter Ausgestaltung der Erfindung, wenn der sich ergebende Messstrom erfasst wird und aus dem Messstrom, welcher von der Senkelektrode durch den Elektrolyt hindurch zum Werkstück fließt, zum Bestimmen des Wertes für den Abstand zwischen Senkelektrode und Werkstück herangezogen wird. Dabei wird der sich ergebende Wert für den Abstand in Abhängigkeit des Messstromes insbesondere anhand einer empirisch ermittelten Tabelle abgeleitet, wobei Zwischenwerte durch Intrapolation bestimmt werden können. Es entspricht dabei einer vorteilhaften weiterführenden Ausgestaltung, wenn die Tabellenwerte aufgrund empirischer Ermittlung bestimmt wurden, wobei beim empirischen Ermitteln insbesondere auch die Arbeitsspannung als weitere Einflussgröße mitberücksichtigt wurde.

In vorteilhafter Weise kann darüber hinaus in erfindungsgemäßer Vorgehensweise vorgesehen sein, dass die sich aus Messspannung und Messstrom ergebende Beziehung nicht nur zur Bestimmung des Abstandes zwischen Senkelektrode herangezogen wird, sondern darüber hinaus auch die Arbeitsspannung in Abhängigkeit dieser Beziehung zwischen Messspannung und Messstrom festgelegt wird. Dies ermöglicht es neben der Regelung des Abstandes die Arbeitsspannung so zu bestimmen, dass einerseits ein sicheres Verhindern von Funkenüberschlag bzw. Kurzschluss gewährleistet ist und andererseits mit einer möglichst großen Arbeitsspannung und damit einem möglichst großen Arbeitsstrom gearbeitet werden kann, so dass sich hieraus eine möglichst große Abtraggeschwindigkeit bei sehr hoher Präzision erzielen lässt. Im Übrigen ist die Erfindung nachfolgend anhand der in der Zeichnung dargestellten Ausführungsbeispiele näher erläutert. Dabei zeigt:
- Fig. 1: das Aufschalten der Messspannung auf die Arbeitsspannung, wobei die Arbeitsspannung eine Gleichspannung ist;
- Fig. 2: das Spannungszeitdiagramm, das sich ergibt, wenn als Messspannung eine Wechselspannung und als Arbeitsspannung eine gepulste Gleichspannung verwendet wird; und
- Fig. 3: ein qualitatives Diagramm der Beziehung zwischen Abstand und Messstrom I_{M}.

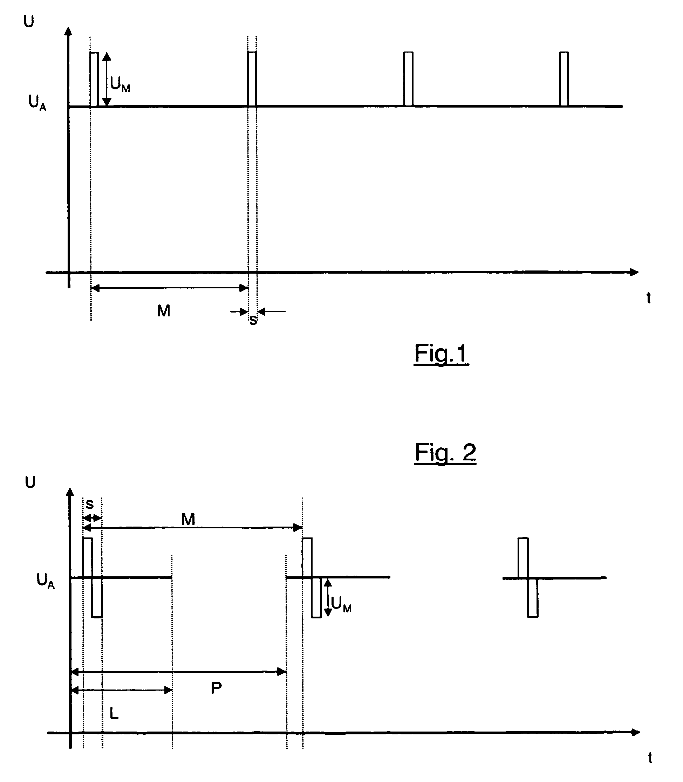

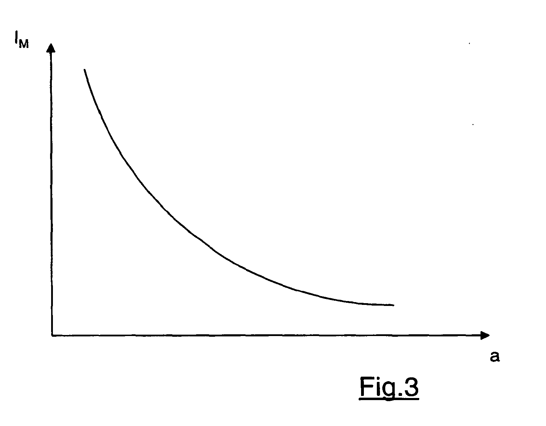

Die Figuren 1 und 2 zeigen jeweils das Diagramm des Spannungsverlaufes über der Zeit hinweg, welches bei der Durchführung des erfindungsgemäßen Verfahrens gegeben ist. Bei dem erfindungsgemäßen Verfahren wird die Spannung an der Senkelektrode erzeugt und der sich aufgrund des Erzeugens der Spannung ergebende Stromfluss gemessen. In einer Recheneinrichtung wird dann zunächst der sich aufgrund der Arbeitsspannung ergebende Arbeitsstrom aus dem Stromsignal herausgefiltert, so dass dieses nur noch die Komponente enthält, welche durch die Messspannung bedingt ist. Dies kann beispielsweise mittels eines Hochpassfilters oder einer anderen entsprechenden Einrichtung erfolgen. Dies kann auch dadurch geschehen, dass die Spannungserzeugungseinrichtung für die Messspannung von der Spannungserzeugungseinrichtung für die Arbeitsspannung getrennt ist, so dass der sich ergebende Messstrom direkt im Bereich der Spannungserzeugungseinrichtung für die Messspannung messbar ist. Aus dem Messstrom wird dann ein entsprechender Wert für den Abstand zwischen Senkelektrode und Werkstück abgeleitet. Dabei zeigt die Fig. 3 in qualitativer Form den Zusammenhang zwischen dem Abstand a und dem Messstrom I_{M}. Beispielsweise durch Kalibrieren kann aus der qualitativen Beziehung eine quantitativ bestimmte Beziehung werden, so dass aus einem Messstrom ein Wert für den Abstand ermittelbar ist. Es ist ersichtlich, dass der Gradient des Messstromes bei geringen Abständen a besonders groß ist und daher eine hohe Messauflösung ermöglicht.

Die Figur 1 zeigt einen Spannungsverlauf, wie er gegeben ist, wenn als Arbeitsspannung U_{A} eine Gleichspannung erzeugt wird. In regelmäßigen Abständen der Periodizität M wird der Arbeitsspannung U_{A} die Messspannung U_{M} überlagert. Dabei ist die Signaldauer s möglichst gering und bewegt sich beispielsweise im Bereich von 1ms bis 0,1s.

Die Figur 2 zeigt das gleiche Diagramm für den Fall, dass es sich bei der Arbeitsspannung U_{A} um eine gepulste Gleichspannung handelt, wobei nach einer Pulsdauer P jeweils für eine Pulslänge L für die Gleichspannung U_{A} erzeugt wird. Zur Abstandsmessung wird während jedes Pulses der Pulslänge L wenigstens einmal eine Messspannung U_{M} aufgeschaltet. Dabei ist die Signaldauer s der Messspannung gegenüber der Zeit L sehr gering. Insbesondere wird die Messspannung periodisch mit einer Periodizität M erzeugt. Sowohl Signaldauer s als auch Betrag der Messspannung U_{M} sind beispielsweise in Abhängigkeit von Periodizität M, Pulslänge L und anderen Größen so bestimmbar, dass sowohl eine präzise Abstandsbestimmung als auch geringe Störungen und unerwünschte Beeinflussungen durch das Messen auftreten.

Bei der Messspannung U_{M} kann es sich sowohl um eine Gleichspannung handeln, wie dies in der Figur 1 dargestellt ist, als auch um eine Wechselspannung, wie dies in der Figur 2 gezeigt ist. Dabei ist die Gestaltung der Messspannung U_{M} unabhängig von der Gestaltung der Arbeitsspannung UA. Die Figur 2 zeigt eine Messspannung U_{M}, welche als rechteckig verlaufendes Spannungssignal ausgebildet ist, wobei die Signalamplitude der Arbeitsspannung U_{M} entspricht. In der gezeigten Ausführungsform ist die Signaldauer s der Messspannung U_{M} so bestimmt, dass genau eine Schwingung der Spannungskurve der Wechselspannung als Messsignal erzeugt wird.

## Patentansprüche

1. Verfahren zum Senken von Werkstücken, mit einer Senkelektrode die in bestimmtem Arbeitsabstand zum Werkstück geführt wird, wobei zwischen Werkstück und Senkelektrode ein Elektrolyt vorgesehen ist und zwischen Senkelektrode und Werkstück ein Arbeitsstrom fließt, welcher sich aus einer Arbeitsspannung (U_{A}) ergibt, welche an der Senkelektrode gegenüber dem an der Masse liegenden Werkstück erzeugt wird, wobei
- der Abstand zwischen Senkelektrode und Werkstück geregelt ist,
- die Arbeitsspannung (U_{A}) so bestimmt ist, dass der Arbeitsstrom ein Gleichstrom oder ein gepulster Gleichstrom ist,
**dadurch gekennzeichnet, dass**
- der Arbeitsspannung (U_{A}) eine Messspannung (U_{M}) überlagert ist,
- der sich aufgrund des Aufschaltens der Messspannung (U_{M}) ergebende Messstrom erfasst wird,
- aus der Beziehung zwischen Messspannung (U_{M}) und Messstrom der Abstand zwischen Senkelektrode und Werkstück ermittelt wird.

2. Verfahren nach Anspruch 1, **dadurch gekennzeichnet, dass** die Messspannung (U_{M}) periodisch, insbesondere mit vorgegebener Periodizität (M), erzeugt wird.

3. Verfahren nach Anspruch 2, **dadurch gekennzeichnet, dass** die Messspannung (U_{M}) eine Gleichspannung ist, wobei vorzugsweise die Spannungsdifferenz zwischen Senkelektrode und Werkstück erhöht wird.

4. Verfahren nach einem der Ansprüche 1 oder 2, **dadurch gekennzeichnet, dass** die Messspannung (U_{M}) eine Wechselspannung hoher Frequenz ist, wobei die Signaldauer (s) des Erzeugens der Messspannung (U_{M}) höchstens eine geringe Anzahl von Spannungsschwingungen beträgt.

5. Verfahren nach einem der vorhergehenden Ansprüche, **dadurch gekennzeichnet, dass** die sich aufgrund der Messspannung (U_{M}) ergebende Änderung des durch den Elektrolyt zum Werkstück ergebenden Stromes erfasst und daraus ein Wert für den Abstand zwischen Senkelektrode und Werkstück abgeleitet wird.

6. Verfahren nach Anspruch 6, **dadurch gekennzeichnet, dass** die Beziehung zwischen sich während des Anliegens der Messspannung (U_{M}) ergebendem Strom und Abstand von Senkelektrode und Werkstück in einer empirisch ermittelten Tabelle abgespeichert ist.

7. Verfahren nach einem der vorhergehenden Ansprüche, **dadurch gekennzeichnet, dass** die sich aus Messspannung (U_{M}) und Messstrom ergebende Beziehung zur Regelung der Arbeitsspannung (U_{A}) herangezogen wird.

## Claims

1. Method for the electrochemical machining of workpieces having a tool electrode that is guided at a certain working distance from the workpiece, wherein provided between the workpiece and the tool electrode there is an electrolyte, and flowing between the tool electrode and the workpiece there is a working current which is produced from a working voltage (U_{A}) generated at the tool electrode with respect to the workpiece connected to earth, wherein
- the distance between the tool electrode and the workpiece is regulated,
- the working voltage (U_{A}) is determined in such a way that the working current is a direct current or a pulsed direct current,
**characterised in that**
- a measurement voltage (U_{M}) is superimposed on the working voltage (U_{A}),
- the measurement current that is produced on account of the application of the measurement voltage (U_{M}) is detected,
- the distance between the tool electrode and the workpiece is ascertained from the relationship between the measurement voltage (U_{M}) and the measurement current.

2. Method according to claim 1, **characterised in that** the measurement voltage (U_{M}) is generated periodically, in particular with predetermined periodicity (M).

3. Method according to claim 2, **characterised in that** the measurement voltage (U_{M}) is a direct voltage, with the voltage difference between the tool electrode and the workpiece preferably being increased.

4. Method according to one of claims 1 or 2, **characterised in that** the measurement voltage (U_{M}) is an alternating voltage of high frequency, with the signal duration (s) of the generation of the measurement voltage (U_{M}) amounting to at most a small number of voltage oscillations.

5. Method according to one of the preceding claims, **characterised in that** the change, produced on account of the measurement voltage (U_{M}), in the current produced through the electrolyte to the workpiece is detected and a value for the distance between the tool electrode and the workpiece is derived therefrom.

6. Method according to claim 6, **characterised in that** the relationship between the current produced during the application of the measurement voltage (U_{M}) and the distance between the tool electrode and the workpiece is stored in an empirically established table.

7. Method according to one of the preceding claims, **characterised in that** the relationship produced from the measurement voltage (U_{M}) and the measurement current is used to regulate the working voltage (U_{A}).

## Revendications

1. Procédé d'usinage par électrochimie de pièces de travail, comprenant une électrode d'usinage par électrochimie guidée, à une distance de travail donnée, vers la pièce de travail, un électrolyte étant prévu entre la pièce de travail et l'électrode d'usinage par électrochimie et un courant de travail s'écoulant entre l'électrode d'usinage par électrochimie et la pièce de travail, courant de travail qui résulte d'une tension de travail (U_{A}) générée au niveau de l'électrode d'usinage par électrochimie en face de la pièce de travail à la masse, dans lequel
> la distance entre l'électrode d'usinage par électrochimie et la pièce de travail est réglée,
➢ la tension de travail (U_{A}) est déterminée de telle sorte que le courant de travail est un courant continu ou un courant continu pulsé,
**caractérisé en ce que** :
➢ on superpose une tension de mesure (U_{M}) à la tension de travail (U_{A}),
➢ on enregistre le courant de mesure résultant de l'activation de la tension de mesure (U_{M}),
➢ on détermine la distance entre l'électrode d'usinage par électrochimie et la pièce de travail à partir du rapport entre la tension de mesure (U_{M}) et le courant de mesure.

2. Procédé selon la revendication 1, **caractérisé en ce que** la tension de mesure (U_{M}) est générée périodiquement, en particulier avec une périodicité prédéterminée (M).

3. Procédé selon la revendication 2, **caractérisé en ce que** la tension de mesure (U_{M}) est une tension continue, la différence de tension entre l'électrode d'usinage par électrochimie et la pièce de travail étant de préférence augmentée.

4. Procédé selon l'une des revendications 1 ou 2, **caractérisé en ce que** la tension de mesure (U_{M}) est une tension alternative de haute fréquence, la durée de signal (s) de la génération de la tension de mesure (U_{M}) étant au maximum égale à un faible nombre d'oscillations de tension.

5. Procédé selon l'une des revendications précédentes, **caractérisé en ce qu'**on enregistre la variation, résultant de la tension de mesure (U_{M}), du courant passant à travers l'électrolyte vers la pièce de travail et on en déduit une valeur pour la distance entre l'électrode d'usinage par électrochimie et la pièce de travail.

6. Procédé selon la revendication 6, **caractérisé en ce que** le rapport entre le courant produit pendant l'application de la tension de mesure (U_{M}) et la distance entre l'électrode d'usinage par électrochimie et la pièce de travail est stocké dans un tableau déterminé empiriquement.

7. Procédé selon l'une des revendications précédentes, **caractérisé en ce que** le rapport résultant de la tension de mesure (U_{M}) et du courant de mesure est utilisé pour régler la tension de travail (U_{A}).
